# EUROPEAN PATENT SPECIFICATION

(11) **EP 2 013 056 B1**
(45) Date of publication and mention of the grant of the patent: **08.08.2012**
(21) Application number: 07712898.1
(22) Date of filing: 14.03.2007
(51) Int. Cl.: B60N 2/28

(54) **CHILD SAFETY SEAT HEADREST**
KOPFSTÜTZE FÜR KINDERSICHERHEITSSITZ
APPUIE-TETE DE SIEGE DE SECURITE POUR ENFANT

(30) Priority: 14.03.2006 GB 0605100
(43) Date of publication of application: 14.01.2009
(73) Proprietor: Britax Excelsior Limited, Hampshire SP10 3UW (GB)
(72) Inventor: CARINE, David, Shaun, Hampshire SP11 6DE (GB); DOWNIE, David, Gardiner, Waterlooville, Hampshire P07 8LH (GB)
(74) Representative: Bosch, Matthias
(86) International application number: PCT/GB2007/000902
(87) International publication number: WO 2007/104989

(56) References cited:
- EP-A- 1 336 531
- DE-A1- 2 115 220
- DE-A1- 3 536 206
- DE-A1-102005 023 890

## Description

The present invention relates to a child safety seat and more particularly to such a seat which has a headrest.

In this connection, improvements in the design of front and rear seats within a vehicle interior have included fitting headrests as standard to all the seats, as well as designing the headrest to project further forward so as to be naturally closer to the head of an occupant. Pitching the headrest further forward arises from the realisation that when seated in a seat, an occupant's head remains relatively upright, rather than slumping back. By pitching the headrest forward, the opportunity for the occupant's head to accelerate before impact with the headrest is reduced, the spacing between the headrest and the occupant's head determining the extent of acceleration and accumulated velocity. As a result, where provided on vehicle seats, such headrests tend to project further forward from the vehicle seat back.

In the field of child seats generally, there is moreover an increased realisation that older children would benefit from their use, meaning that child seat design is increasingly trying to provide a child seat that can accommodate a greater range of child ages and sizes.

As a result, many modern child seats offer a degree of adjustment, including height adjustment of the head rest. However, a problem associated with this flexibility is that a headrest set at the incorrect height for the occupying child can be both uncomfortable and potentially dangerous. Document DE3536206 shows such a child seat and is considered to be the closest prior art.

A further problem which can then arise stems from when a child seat having a height adjustable head rest is used with a vehicle seat which itself has headrests. In this regard, with the child seat headrest raised to its upper extension, there is a likelihood that it will impinge with the vehicle seat headrest, such that the child seat back does not lie in full contact against the vehicle seat back, and the child seat base does not lie flat on the vehicle seat. This destabilises the child seat, thereby potentially resulting in serious consequence in respect of the child seat not functioning correctly, particularly in the event of an accident.

The present invention seeks to alleviate such problems associated with.the prior known arrangements.

According to the present invention there is provided a child seat comprising a seat back and a headrest; wherein the headrest has at least a portion which is movable for accommodating a head rest of a vehicle seat against which the child seat is placed. As such, when in position on a vehicle seat having a headrest, the child seat head rest is not urged forward undesirably.

Movement of the portion may cause the headrest of the child seat to move with respect to the seat back. Preferably, the portion is, on installation of the child seat on said vehicle seat, moveable on engagement of the headrest of the child seat and the headrest of the vehicle seat. The headrest of the child seat may be moveable forwardly in relation to said seat back.

The headrest is pivotally coupled to the seat back. In this way, the vehicle seat headrest can be suitably accommodated. As such, the headrest has greater freedom of movement, allowing better matching with the movement of the child's neck joint.

Conveniently, the headrest is pivotally coupled about an axis running along the top of the seat back. The child seat head rest can thereby pivot readily to an optimal position.

The child seat further comprises holding means for holding the child seat headrest at a preferred orientation. In this manner, the child seat headrest can be adjusted to an optimal position and then retained at that position.

The pivotal coupling comprises a headrest connection means and a seat back connection means each provided for rotation on a common axle pin. Conveniently, one of the headrest connection means and the seat back connection means has a though aperture for receiving an actuating cable. This provides a compact arrangement.

The pin has a camming handle at one end, actuation thereof compressing the headrest connection means and the seat back connection means together to secure their relative angular position.

Conveniently, the headrest connection means and the seat back connection means have mountings for slidable engagement with the headrest and seat back respectively.

An embodiment of the present invention will now be described with reference to the accompanying drawings, in which:-
Figure 1 shows a side view of a known child seat incorporating a headrest when in place on a vehicle having a headrest;
Figure 2 shows a side view of a child seat incorporating a headrest according to the present invention when in place on a vehicle having a headrest;
Figure 3 shows a perspective view from the rear of the child seat of Figure 2 with the headrest in a tilted orientation;
Figures 4A-4E show perspective and cross-sectional views of a joint used with the present invention in a first orientation; and
Figures 5A-5E show perspective and cross-sectional views of a joint used with the present invention in a second orientation.

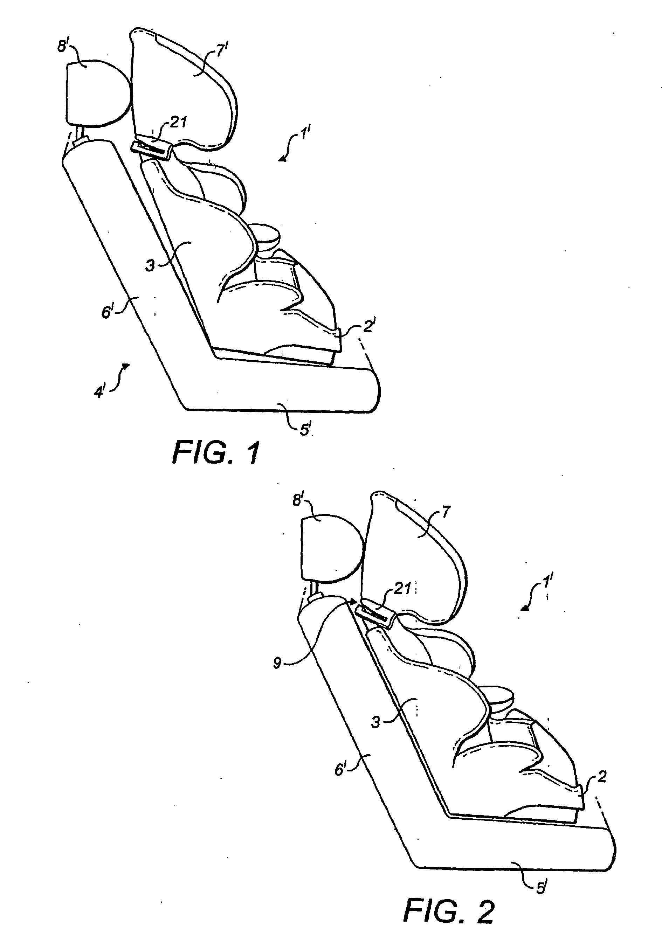

Referring to the Figure 1 of the drawings, there is shown a known child seat 1', formed of a seat base 2' and a seat back 3'. The child seat 1' rests upon a vehicle seat 4' comprised of a vehicle seat base 5' and a vehicle seat back 6'. A belt guide 21 is provided for guiding a seat belt correctly in relation to the seat.

In this known child seat a headrest 7' is fixed relative to the child seat back 3' so that when in a relatively high position it impinges against the vehicle seat headrest 8'. As shown, the result of this is that the child seat 1' is not correctly seated on the vehicle seat 4', either on its back on or on its base, with a gap developing between the vehicle seat back 6' and the child seat back 3'. As such, the child seat can not function correctly, and its ability to protect a child residing therein in the event of an accident is substantially compromised.

In Figure 2, there is shown a child seat 1 according to the present invention comprising a child seat base 2 and child seat back 3. The seat moreover comprises a head rest 7 which allows for pivotal movement relative to the seat back. As such, even though the head rest 7 impinges upon the vehicle seat headrest 8', the child seat is able to seat correctly on the vehicle seat because of a joint 9 provided between the headrest 7 and the child seat back 3.

As illustrated in Figure 2, the headrest 7 can move away forwardly as a result of the position of the headrest 8' of the vehicle seat 4'. In particular, the headrest 7 moves forwards (with reference to the usual direction of travel) so that the head rest 8' of the vehicle seat 4' does not itself support the child seat. Instead, the child seat 1 is supported by the back rest 6' and the seat bottom 5' of the vehicle seat 4'. In this configuration, the head rest 7 of the child seat 1 can be brought into and out of engagement with the headrest 8' of the vehicle seat 4' without changing the position of the child seat 1 on the vehicle seat 4'.

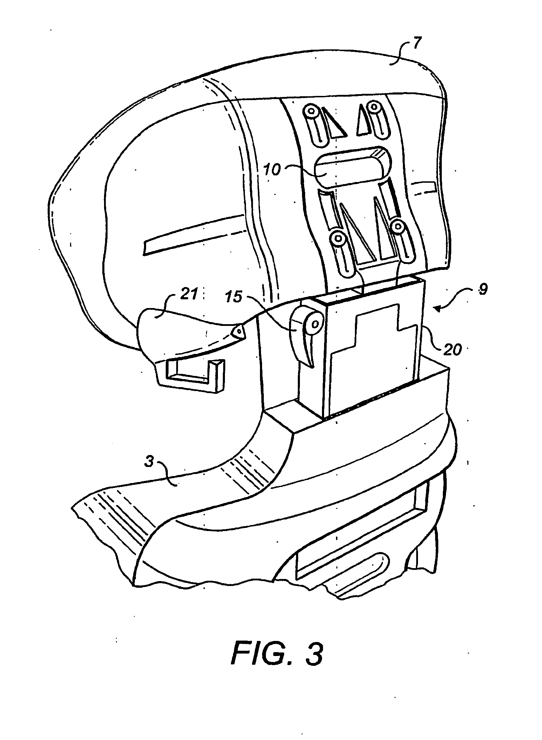

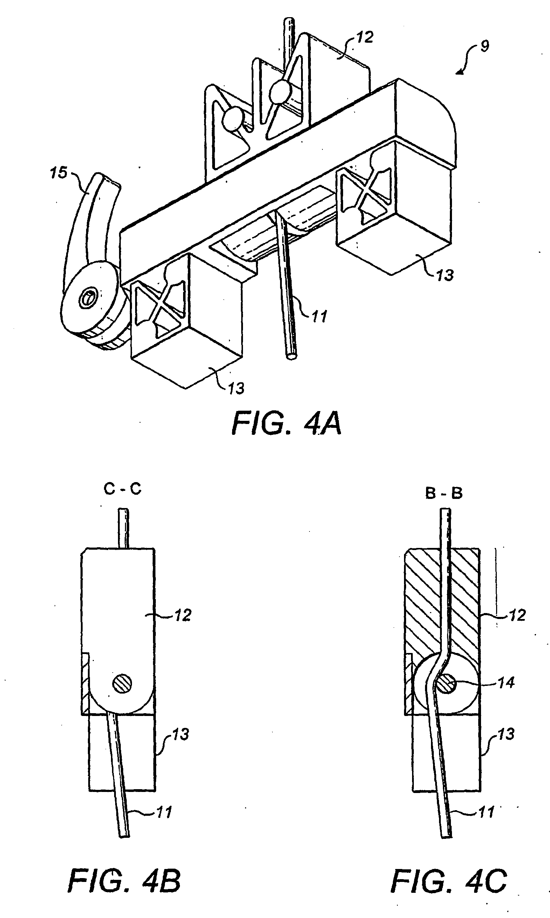

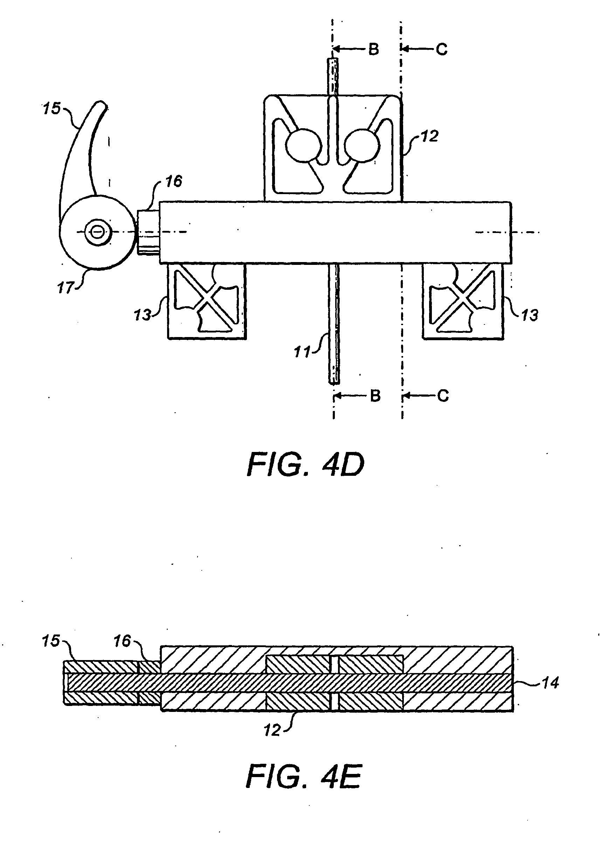

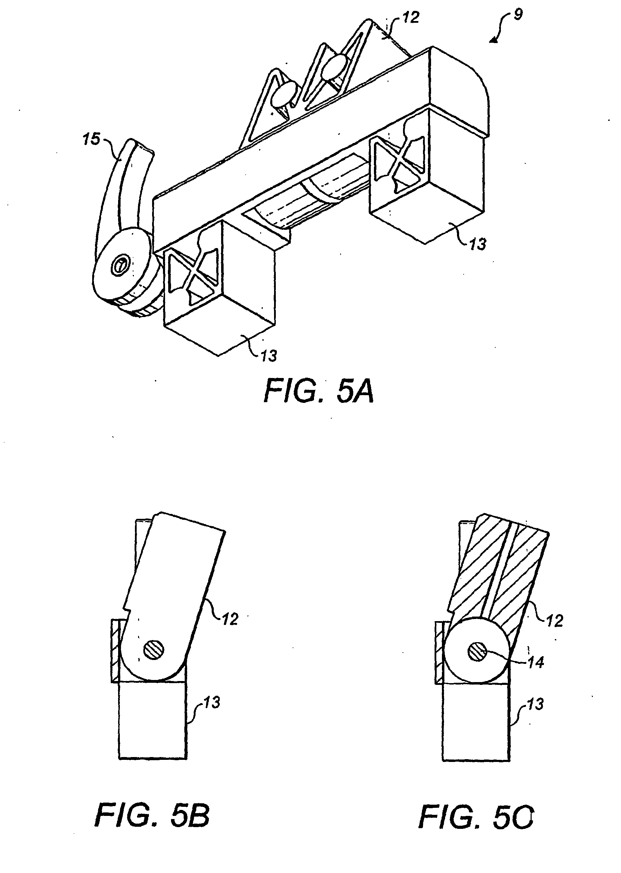

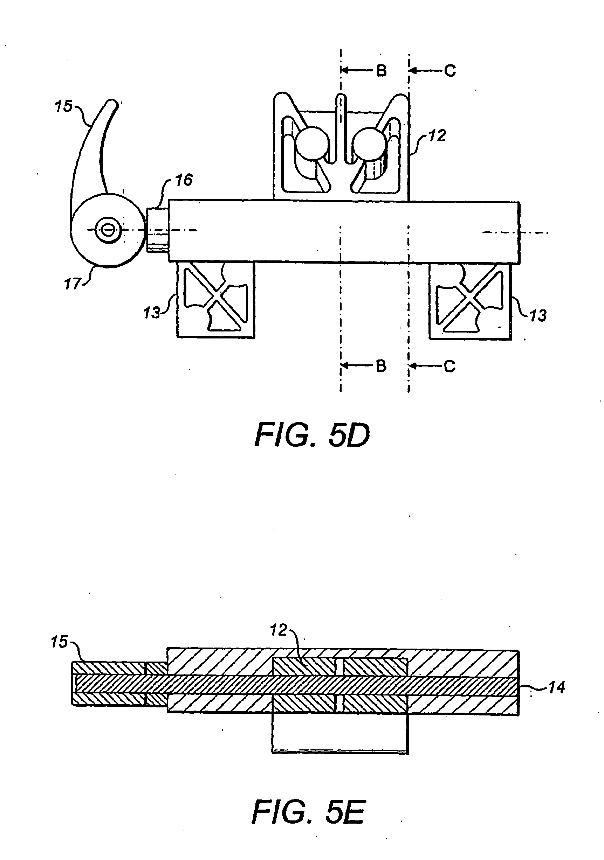

The perspective and cross-sectional views of Figures 4A-4E and 5A-5E show the headrest joint 9 in alternative configurations, namely upright and tilted respectively. In this connection, as shown in Figure 3, the joint 9 is incorporated into an upright neck member 20 projecting from the child seat back 3. This neck member 20 can be raised or lowered, the headrest incorporating a handle 10 which is used for uncoupling a locking mechanism for releasing the headrest for such vertical adjustment. This is not discussed in detail in this application, but the locking mechanism for this vertical adjustment requires a flexible connection from the handle 10 through the joint 9 to the child seat back 3. The connection is provided in the form of a cable 11 shown in Figures 4A to 4D which couples the handle 10 with a locking mechanism (not shown) provided lower in the seat back 3.

As shown in the perspective and cross-sectional views of Figure 4A-4E and 5A-5E, the joint 9 itself comprises headrest connection means 12 and child seat back connection means 13, provided on a common axle or pin 14. As such the headrest and seat back connection means can pivot relative to one another about the axle. The pin 14 runs through from one end of the headrest connection means, through the seat back connection means and is secured to the far headrest connection means. A clamping handle 15 is provided to the near end of the pin and forms a locking/release handle. By turning or flipping the clamping handle, a cam surface 17 provided thereon acts on follower 16 to pull the pin 14 relative to the headrest connection means and child seat back connection means. As such the headrest and child seat back connection means 12,13 are compressed together, locking them in their relative positions/orientations.

Rotating or flipping the clamping handle in the opposite direction releases the tension in the pin 14, thereby allowing relative rotational movement between the headrest and child seat back connection means.

The headrest and child seat back connection means 12,13 have box-shaped protrusions which are mounted in the headrest 7 and neck member 20 of the seat back respectively. These protrusions have reinforcing webbing.

Alternative means for accommodating a vehicle seat headrest are envisaged within the scope of the invention, such as a cavity in the rear of the headrest having a movable cover panel.

## Claims

1. A child seat comprising a seat back (3) with a projecting neck member (20) and a headrest (7); wherein
the neck member (20) is adapted to be raised or lowered to allow matching with the movement of a child's neck joint;
the headrest (7) incorporates a handle (10) usable for uncoupling a locking mechanism for releasing the neck member (20) for vertical adjustment; and
the headrest (7) has at least a portion which is moveable for accommodating a head rest of a vehicle seat against which the child seat is placed, wherein the headrest (7) is pivotally coupled to the seat back (3), and wherein the pivotal coupling comprises a headrest connection means (12) and a seat back connection means (13) each provided for rotation on a common axle pin (14), wherein the pin (14) has a camming handle (15) at one end, actuation thereof compressing the headrest connection means (12) and the seat back connection means (13) together to secure their relative angular position.

2. A child seat according to claim 1, wherein the portion is, on installation of the child seat on said vehicle seat, moveable on engagement of the headrest (7) of the child seat and the headrest (7) of the vehicle seat.

3. A child seat according to claim 1 or claim 2 wherein the headrest (7) of the child seat is moveable forwardly in relation to said seat back (3).

4. A child seat according to any preceding claim, wherein the headrest (7) is pivotally coupled about an axis running along the top of the seat back (3).

5. A child seat according to any one of claims 3 and 4, further comprising holding means for holding the headrest (7) at a preferred orientation.

6. A child seat according to claim 5, wherein the holding means is for holding the headrest (7) at a chosen position relative to said seat back (3).

7. A child seat according to claim 1, wherein one of the headrest (7) connection means and the seat back (3) connection means has a though aperture for receiving an actuating cable (11).

8. A child seat according to any one of the claims 1 to 7, wherein the headrest connection means (12) and the seat back connection means (13) have mountings for slidable engagement with the headrest (7) and seat back (3) respectively.

## Patentansprüche

1. Kindersitz mit einer Rückenlehne (3) mit einem vorstehenden Nackenteil (20) und einer Kopfstütze (7); wobei
das Nackenteil (20) ausgelegt ist, um hinauf- oder hinunterbewegt zu werden, um eine Anpassung an die Bewegung des Nackengelenks eines Kindes zu ermöglichen;
die Kopfstütze (7) einen Griff (10) aufweist, der verwendbar ist, um einen Arretiermechanismus zu lösen, um das Nackenteil (20) zur vertikalen Einstellung freizugeben; und
die Kopfstütze (7) wenigstens einen Abschnitt hat, der bewegbar ist, um eine Kopfstütze eines Fahrzeugsitzes aufzunehmen, an dem der Kindersitz platziert wird, wobei die Kopfstütze (7) schwenkbar mit der Rückenlehne (3) verbunden ist, und wobei die schwenkbare Verbindung eine Kopfstützen-Verbindungseinrichtung (12) und eine Rückenlehnen-Verbindungseinrichtung (13) aufweist, die jeweils zur Drehung auf einem gemeinsamen Achsbolzen (14) vorgesehen sind, wobei der Bolzen (14) an einem Ende einen Schiebegriff (camming handle) (15) hat, dessen Betätigung die Kopfstützen-Verbindungseinrichtung (12) und die Rückenlehnen-Verbindungseinrichtung (13) zusammendrückt, um ihre relative Winkelposition zu sichern.

2. Kindersitz nach Anspruch 1, wobei der Abschnitt beim Installieren des Kindersitzes auf dem Fahrzeugsitz beim Eingreifen der Kopfstütze (7) des Kindersitzes in die Kopfstütze (7) des Fahrzeugsitzes bewegbar ist.

3. Kindersitz nach Anspruch 1 oder Anspruch 2, wobei die Kopfstütze (7) des Kindersitzes in Bezug zu der Rückenlehne (3) nach vorne bewegbar ist.

4. Kindersitz nach einem der vorhergehenden Ansprüche, wobei die Kopfstütze (7) schwenkbar um eine Achse, die entlang der Oberseite der Rückenlehne (3) verläuft, verbunden ist.

5. Kindersitz nach einem der Ansprüche 3 und 4, der des Weiteren eine Halteeinrichtung zum Halten der Kopfstütze (7) in einer bevorzugten Ausrichtung aufweist.

6. Kindersitz nach Anspruch 5, wobei die Halteeinrichtung zum Halten der Kopfstütze (7) in einer gewählten Position in Bezug zu der Rückenlehne (3) vorgesehen ist.

7. Kindersitz nach Anspruch 1, wobei eine der Kopfstützen (7) -Verbindungseinrichtung und der Rückenlehnen (3) - Verbindungseinrichtung eine Durchgangsöffnung zur Aufnahme eines Betätigungskabels (11) aufweist.

8. Kindersitz nach einem der Ansprüche 1 bis 7, wobei die Kopfstützen-Verbindungseinrichtung (12) und die Rückenlehnen-Verbindungseinrichtung (13) Halterungen zum gleitenden Eingriff mit der Kopfstütze (7) bzw. der Rückenlehne (3) haben.

## Revendications

1. Siège pour enfant comprenant un dossier de siège (3) avec un élément pour le cou (20) en saillie et un appui-tête (7), dans lequel
l'élément pour le cou (20) est adapté à être monté ou abaissé pour permettre une adaptation au mouvement de l'articulation du cou d'un enfant ;
l'appui-tête (7) incorpore une poignée (10) utilisable pour découpler un mécanisme de verrouillage pour libérer l'élément pour le cou (20) pour un ajustement vertical ; et
l'appui-tête (7) a au moins une partie qui est mobile pour recevoir un appui-tête d'un siège de véhicule contre lequel le siège pour enfant est placé, dans lequel l'appui-tête (7) est couplé de manière pivotante au dossier de siège (3), et dans lequel le couplage pivotant comprend un moyen de connexion (12) d'appui-tête et un moyen de connexion (13) de dossier de siège prévus chacun pour une rotation sur une broche (14) d'axe commune, dans lequel la broche (14) a une poignée de coinçage (15) à une extrémité, l'actionnement de laquelle compressant le moyen de connexion (12) d'appui-tête et le moyen de connexion (13) de dossier de siège ensemble pour fixer leur position angulaire relative.

2. Siège pour enfant selon la revendication 1, dans lequel la partie est, à l'installation du siège pour enfant sur ledit siège de véhicule, mobile à l'engagement de l'appui-tête (7) du siège pour enfant et de l'appui-tête (7) du siège de véhicule.

3. Siège pour enfant selon la revendication 1 ou la revendication 2, dans lequel l'appui-tête (7) du siège pour enfant est mobile vers l'avant par rapport audit dossier de siège (3).

4. Siège pour enfant selon une quelconque revendication précédente, dans lequel l'appui-tête (7) est couplé de manière pivotante autour d'un axe courant sur le haut du dossier de siège (3).

5. Siège pour enfant selon l'une quelconque des revendications 3 et 4, comprenant en outre un moyen de maintien pour maintenir l'appui-tête (7) selon une orientation préférée.

6. Siège pour enfant selon la revendication 5, dans lequel le moyen de maintien sert à maintenir l'appui-tête (7) en une position choisie par rapport audit dossier de siège (3).

7. Siège pour enfant selon la revendication 1, dans lequel un du moyen de connexion d'appui-tête (7) et du moyen de connexion de dossier de siège (3) a une ouverture traversante pour recevoir un câble d'actionnement (11).

8. Siège pour enfant selon l'une quelconque des revendications 1 à 7, dans lequel le moyen de connexion (12) d'appui-tête et le moyen de connexion (13) de dossier de siège ont des dispositifs de montage pour un engagement en coulissement avec l'appui-tête (7) et le dossier de siège (3) respectivement.
